(19) Europäisches Patentamt

European Patent Office

Office européen des brevets

(11) **EP 0 948 171 B1**

(12) **EUROPEAN PATENT SPECIFICATION**

(45) Date of publication and mention
of the grant of the patent:
**29.12.2004 Bulletin 2004/53**

(51) Int Cl.7: **H04L 25/03**, H04L 1/06

(21) Application number: **98302655.0**

(22) Date of filing: **03.04.1998**

(54) **Adaptive equaliser using known and pseudo-known symbols**

Adaptiver entzerrer unter verwendung von bekannten und pseudobekannten symbolen

EGALISEUR AUTOMATIQUE UTILISANT DES SYMBOLES CONNUS ET PSEUDO-CONNUS

(84) Designated Contracting States:
**DE ES FI FR GB IT SE**

(43) Date of publication of application:
**06.10.1999 Bulletin 1999/40**

(73) Proprietor: LUCENT TECHNOLOGIES INC.
**Murray Hill, New Jersey 07974-0636 (US)**

(72) Inventor: **Speight, Timothy James**
**Clifton, Bristol BS8 1AA (GB)**

(74) Representative: **Funnell, Samantha Jane et al**
**Lucent Technologies UK Limited,**
**5 Mornington Road**
**Woodford Green, Essex IG8 0TU (GB)**

(56) References cited:
**EP-A- 0 677 952        GB-A- 1 503 083**
**US-A- 3 633 107        US-A- 5 331 662**

## Description

This invention relates to digital communication systems, e.g. mobile cellular telephone systems.

In general, symbols are degraded in transmission in a digital communication network. In, for example, a GSM system, received signals are degraded by the delays due to multipath propagation, by interference from terminals using the same channel and by more general noise.

Tapped delay line space and/or time processing may be used to reduce the effects of multipath propagation and interference from other terminals, space processing steering an antenna array to reduce signal levels from interferers and time processing reducing the effect of multipath propagation. Space/time processing can be combined in one multi-branch tapped delay line processor to adapt an antenna array. In order to adapt the antenna, each frame of symbols transmitted by a mobile terminal contains a "mid-amble" comprising a known "training" sequence of 26 symbols. The mobile terminal is instructed by the relevant base station to use one of a number of predetermined training sequences so as to enable interfering terminals to be distinguished. Each of the antennas in the array has a respective tapped delay line equaliser in which the tap output signals are weighted and summed. In a known theoretical proposal, the weights W are determined as follows:

$$w = R_{xx}^{-1} r_{xd}$$

where $R_{xx}$ is the autocorrelation matrix of the input to the system and $r_{xd}$ is the crosscorrelation vector of the input signal and the known sequence. In practice estimates may be obtained by averaging the instantaneous matrices and vectors over the training sequence.

The accuracy of the estimates is limited by the short 26 symbol training sequence.

United States patents US-A-3633107 and US-A-5331662, United Kingdom patent GB-A-1503083 and European patent application EP-A-0677952 are referred to as background.

Against this background, the invention provides a method of adjusting tap weights of a tapped delay line space and/or time processor by successive iterations, with reference to known and pseudo-known symbols, the weighted tap outputs being summed, wherein a first iteration is carried out by reference to known symbols of a training sequence, subsequent iterations being made with reference to both known and pseudo-known symbols, the latter being selected by comparing the real part of the summed tap output signals with a set level, ascribing a symbol value of logical zero to those summed tap output signals which fall to one side of the set level and ascribing a symbol value of logical one to those summed tap output signals which fall to the other side of the set level and selecting as pseudo-known those symbol values for which the level exceeds a threshold distance from the set level, the threshold being varied between iterations and successive iterations being evaluated by:

calculating the mean of the levels of those signals ascribed the value logical zero and the mean of the levels of those signals ascribed the value logical one;

calculating the distance between the level of each signal ascribed the value logical zero and the respective mean and the level of each signal ascribed the value logical one and the respective mean;

calculating the sum of the distances from the means;

calculating the distances of the levels of all signals from the set level;

calculating the sum of the distances of the levels of all signals from the set level;

calculating the ratio of the sum of the distances from the means to the sum of the distances of the levels of all symbols from the set level, selecting the $R_{xx}$ matrix which gives the lowest ratio, where $R_{xx}$ is an estimate of the autocorrelation matrix of the input to the system, and

determining the adjusted tap weights from the selected $R_{xx}$ matrix.

In effect, those symbols having levels of which it is most certain whether they represent a logical zero or a logical one, are used in addition to the training sequence to set the tap weights. Different thresholds are tried and that producing the lowest ratio may be selected.

Preferably, the weights w are determined as follows:

$$W = R_{xx}^{-1} r_{xd}$$

where $R_{xx}$ is an estimate of the autocorrelation matrix of the input to the system and $r_{xd}$ is an estimate of the crosscorrelation vector of the input signal and the sequence of known or known and pseudo-known symbols.

One embodiment of the invention will now be described, by way of example, with reference to the accompanying drawings, in which:

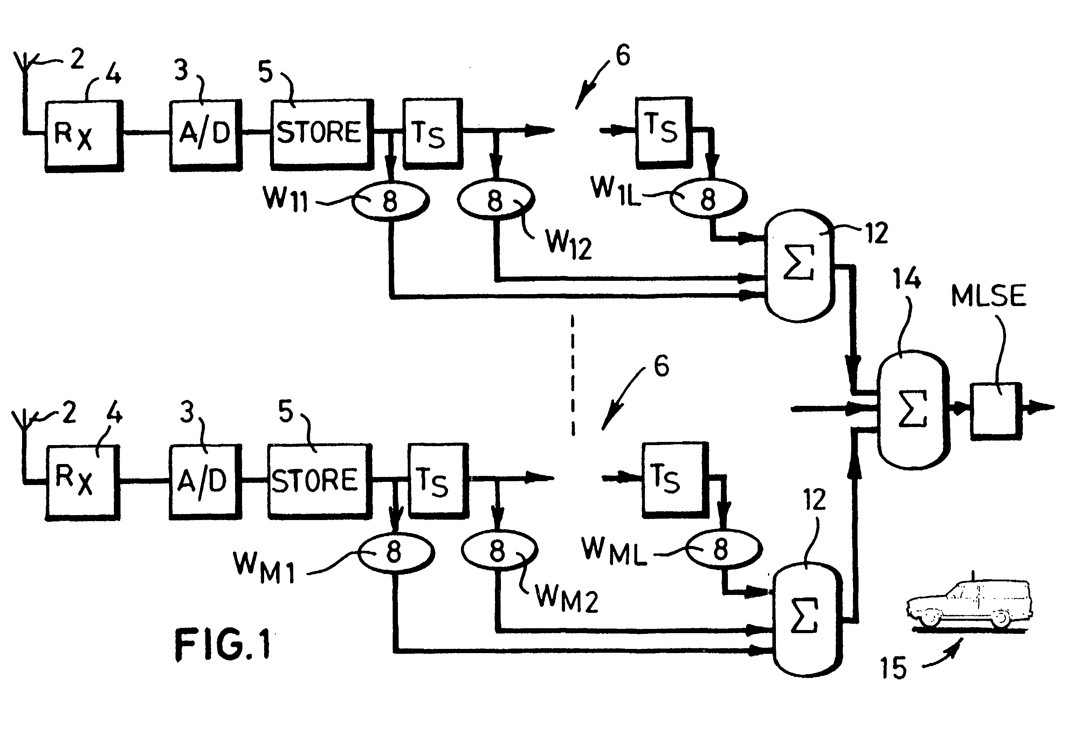

Figure 1 is a schematic drawing of an antenna system and its tapped delay space/time processor; and
Figure 2 is an illustrative plot of signal levels received in a training sequence.

Referring to the drawings, each antenna 2 in an array of M antennas is connected to a respective receiver 4. The signals received by the array are gaussian minimum shift key (GMSK) modulated. The signals are de-rotated in the receivers 4 to remove differential phase encoding of the GMSK signals. The de-rotated signal from each receiver is fed to a respective analog to digital convertor 3 where it is sampled and quantised, and the quantised samples are converted to coded digital signals.

The digitised de-rotated signals are stored in a store 5 from which they can be read in sequence.

The digitaised de-rotated signals are read in sequence to a respective tapped delay line 6 for each antenna. The tapped delay line may be physical or simulated by one or more data processors. The processing is carried out faster than real time in either case so that several iterations can be caried out in one frame.

Whether the tapped delay line is physical or virtual, at each tap, the signal is weighted by individual weights 8, and the weighted signals are summed in a summer 12. The sums from each space/time processor are summed in a summer 14.

In each frame of the signal transmitted by a mobile terminal 15, there is a mid-amble comprising a known training sequence of 26 symbols. There is a plurality of different training sequences and the mobile terminal is instructed by the base station which sequence to send. The training sequence is not re-used by mobile terminal which might interfere with the terminal 15, so that they can be distinguished.

The theoretical basis for weighting the space/ time processors is the Wiener-Hopf equation:

$$w = R_{xx}^{-1} r_{xd}$$

where $R_{xx}$ is the autocorrelation matrix of the input to the system and $r_{xd}$ is the crosscorrelation vector of the input signal and the known sequence.

An estimate of the autocorrelation matrix and the cross correlation vector is made by averaging the instantaneous i.e. symbol by symbol matrices.

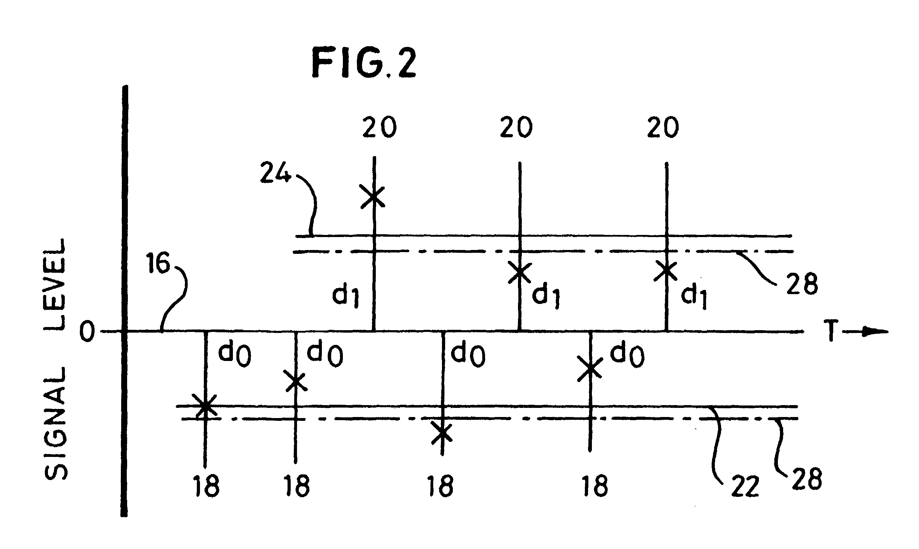

The output of summer 14 is analysed to temporarily ascribe symbol values so as to enable the estimate of $R_{\underline{xx}}$ to be refined using a longer sequence of symbols. In order to do that, pseudo-known symbols are selected from outside the training sequence for which there is a fair degree of certainty as to their validity. A temporary decision to ascribe a symbol value of logical zero or a logical one depends on whether the level of the real part of the output of the summer 14 is positive or negative. Thus a set decision level 16 of zero (see Figure 2) distinguishes the level of logical zero symbols 18 from the level of logical one symbols 20.

For a second iteration, an average of the distance of all symbols from the decision level 16 is calculated. This average 28 is shown on both sides of the decision level 16 in Figure 2. Any symbol level falling outside the levels 28,28 is treated as known and the $R_{xx}$ matrix is recalculated and evaluated as described below.

For further iterations the level 28 is varied in steps in both directions up to 50% larger than the average and 50% less than the average in, for example, 10% steps.

For each iteration, a measure of goodness is calculated to enable the estimate of $R_{xx}$ to be evaluated.

The mean 22 of the distances $d_0$ between the set level 16 and the levels of the zero symbols 18 is calculated. The mean 24 of the distances $d_1$ between the set level 16 and the levels of the logical one symbols 20 is calculated.

The distance between the level of each symbol 18 distinguished as logical zero and the respective mean 22 is calculated. The distance between the level of each symbol 24 distinguished as logical one and the respective mean 24 is calculated.

The sum of all the distances from the means is calculated.

The distances of the levels of all symbols from the set level is calculated.

The sum of the distances of the levels of all symbols from the set level is calculated.

The ratio of the sum of the distances from the means to the sum of the distances of the levels of all symbols from the set level is calculated. The smaller this is, the better the choice of the qulaity of the output. Ideally, the levels of the symbols distinguished as logical zero would all be the same, the levels of the symbols distinguished as logical one would all be the same and the levels of zero and one symbols would be equally spaced from the decision level 16.

In order to take into account that a low value could possibly be obtained even if the error rate in the recovered sequence is high, the ratio is preferably multiplied by (1 + N) where N is the number of errors between the symbols ascribed values by reference to the set level and the symbols in the known sequence.

The value of the product so obtained is a measure of goodness i.e. how good the estimate of $R_{xx}$ is. The lower the value the better the estimate.

Once the full set of thresholds has bee tried, the $R_{xx}$ matrix producing the best measure of goodness is selected and utilised to determine the weights $W_{11}$ to $W_{ML}$.

**Claims**

1.  A method of adjusting tap weights of a tapped delay line space (6) and/or time processor by successive iterations, with reference to known and pseudo-known symbols, the weighted tap outputs being summed, wherein a first iteration is carried out by reference to known symbols of a training sequence, subsequent iterations being made with reference to both known and pseudo-known symbols, the latter being selected by comparing the real part of the summed (12) tap output signals with a set level, ascribing a symbol value of logical zero to those summed tap output signals which fall to one side of the set level and ascribing a symbol value of logical one to those summed tap output signals which fall to the other side of the set level and selecting as pseudo-known those symbol values for which the level exceeds a threshold distance from the set level, the threshold (28) being varied between iterations and successive iterations being evaluated by:

calculating the mean (24) of the levels of those signals ascribed the value logical zero and the mean (28) of the levels of those signals ascribed the value logical one;
calculating the distance between the level of each signal (dl, 20, do, 18) ascribed the value logical zero and the respective mean (22, 24), and the level of each signal ascribed the value logical one and the respective mean;
calculating the sum of the distances from the means;
calculating the distances of the levels of all signals from the set level (16);
calculating the sum of the distances of the levels of all signals from the set level (16);
calculating the ratio of the sum of the distances from the means to the sum of the distances of the levels of all symbols from the set level (16), selecting the $R_{xx}$ matrix which gives the lowest ratio, where $R_{xx}$ is an estimate of the autocorrelation matrix of the input to the system, and determining the adjusted tap weights from the selected $R_{xx}$ matrix.

**2.** A method as claimed in claim 1, wherein the weights w are determined as follows:

$$w = R_{xx}^{-1} r_{xd}$$

where $r_{xd}$ is an estimate of the crosscorrelation vector of the input signal and the sequence of known or known and pseudo-known symbols.

**3.** A method as claimed in claim 1 or 2, wherein before selecting the $R_{xx}$ matrix, the ratio is multiplied by (1 + N) where N is the number of errors between the symbols ascribed values by reference to the set level and the symbols in the known sequence or the known and pseudo known sequence.

**Patentansprüche**

**1.** Verfahren zum Justieren von Abgriffsgewichten eines abgegriffenen-Verzögerungsleitung-Raums (6) und/oder Zeitprozessors durch aufeinanderfolgende Iterationen unter Bezug auf bekannte und pseudobekannte Zeichen, wobei die gewichteten Abgriffsausgangssignale summiert werden, wobei eine erste Iteration unter Bezugnahme auf bekannte Zeichen einer Trainingssequenz durchgeführt wird, aufeinanderfolgende Iterationen unter Bezugnahme sowohl auf bekannte als auch pseudobekannte Zeichen durchgeführt werden, wobei letztere ausgewählt werden durch Vergleichen des realen Teils der summierten (12) Abgriffsausgangssignale mit einem Sollpegel, Zuweisen eines Zeichenwerts von logisch Null zu diesen summierten Abgriffsausgangssignalen, die auf eine Seite des Sollpegels fallen, und Zuweisen eines Zeichenwerts von logisch Eins zu solchen summierten Abgriffsausgangssignalen, die auf die andere Seite des Sollpegels fallen, und solche Zeichenwerte als pseudobekannt auswählen, für die der Pegel eine Schwellwertentfernung vom Sollpegel übersteigt, wobei der Schwellwert (28) zwischen Iterationen variiert wird und aufeinanderfolgende Iterationen ausgewertet werden durch:

Berechnen des Mittelwerts (24) der Pegel jener Signale, denen der Wert logisch Null zugewiesen ist, und des Mittelwerts (28) der Pegel jener Signale, denen der Wert logisch Eins zugewiesen ist;
Berechnen des Abstands zwischen dem Pegel jedes Signals (dl, 20, do, 18), dem der Wert logisch Null zugewiesen ist, und dem jeweiligen Mittelwert (22, 24) und dem Pegel jedes Signals, dem der Wert logisch Eins zugewiesen ist, und dem jeweiligen Mittelwert;
Berechnen der Summe der Abstände von den Mittelwerten;
Berechnen der Abstände der Pegel aller Signale vom Sollpegel (16);
Berechnen der Summe der Abstände der Pegel aller Signale vom Sollpegel (16);
Berechnen des Verhältnisses der Summe der Abstände von den Mittelwerten zu der Summe der Abstände der Pegel aller Symbole vom Sollpegel (16), Auswählen der $R_{xx}$-Matrix, die das niedrigste Verhältnis ergibt, wobei $R_{xx}$ ein Schätzwert der Autokorrelationsmatrix des Eingangssignals für das System ist, und Bestimmen der justierten Abgriffsgewichte aus der ausgewählten $R_{xx}$-Matrix.

**2.** Verfahren nach Anspruch 1, wobei die Gewichte w wie folgt bestimmt werden:

$$w = R_{xx}^{-1} r_{xd}$$

wobei $r_{xd}$ ein Schätzwert des Kreuzkorrelationsvektors des Eingangssignals und der Sequenz bekannter oder bekannter und pseudobekannter Zeichen ist.

**3.** Verfahren nach Anspruch 1 oder 2, wobei vor dem Auswählen der $R_{xx}$-Matrix das Verhältnis mit (1+N) multipliziert wird, wobei N die Anzahl der Fehler der den Zeichen zugewiesenen Werte unter Bezugnahme auf den Sollpegel und den Zeichen in der bekannten Sequenz oder bekannten und pseudobekannten Sequenz ist.

## Revendications

**1.** Procédé de réglage de poids de prises d'un espace de ligne à retard à prises (6) et/ou processeur de temps par itérations successives, en référence à des symboles connus et pseudo-connus, les sorties de prises pondérées étant additionnées, dans lequel une première itération est effectuée en référence à des symboles connus d'une séquence d'apprentissage, les itérations ultérieures étant effectuées en référence à des symboles à la fois connus et pseudo-connus, ces derniers étant sélectionnés en comparant la partie réelle des signaux de sorties de prises (12) additionnés à un niveau établi, en attribuant une valeur de symbole de zéro logique aux signaux de sorties de prises additionnés qui tombent d'un côté du niveau établi et en attribuant une valeur de symbole d'un logique aux signaux de sorties de prises additionnés qui tombent de l'autre côté du niveau établi et en sélectionnant comme signaux pseudo-connus les valeurs de symboles pour lesquelles le niveau dépasse une distance de seuil par rapport au niveau établi, le seuil (28) étant modifié entre des itérations et des itérations successives étant évalué en :

    calculant la moyenne (24) des niveaux des signaux auxquels la valeur de zéro logique a été attribuée et la moyenne (28) des niveaux des signaux auxquels la valeur de un logique a été attribuée ;
    calculant la distance entre le niveau de chaque signal (dl, 20, do, 18) auquel la valeur de zéro logique a été attribuée et la moyenne respective (22, 24), et le niveau de chaque signal auquel la valeur de un logique a été attribuée et la moyenne respective ;
    calculant la somme des distances par rapport aux moyennes ;
    calculant les distances des niveaux de tous les signaux par rapport au niveau établi (16) ;
    calculant la somme des distances des niveaux de tous les signaux par rapport au niveau établi (16) ;
    calculant le rapport de la somme des distances par rapport aux moyennes sur la somme des distances des niveaux de tous les symboles par rapport au niveau établi (16), sélectionnant la matrice $R_{xx}$ qui donne le plus bas rapport, où $R_{xx}$ est une estimation de la matrice d'autocorrélation de l'entrée dans le système, et déterminant les poids de prises réglés à partir de la matrice $r_{xx}$ sélectionnée.

**2.** Procédé selon la revendication 1, dans lequel les poids w sont déterminés comme suit :

$$w = R_{xx}^{-1} r_{xd}$$

où $r_{xd}$ est une estimation du vecteur d'intercorrélation du signal d'entrée et de la séquence de symboles connus ou de symboles connus et pseudo-connus.

**3.** Procédé selon la revendication 1 ou 2, dans lequel avant de sélectionner la matrice $R_{xx}$, le rapport est multiplié par (1 + N) où N est le nombre d'erreurs entre les symboles auxquels des valeurs ont été attribuées en référence au niveau établi et les symboles dans la séquence connue ou la séquence connue et pseudo-connue.

FIG.1

EP 0 948 171 B1

## FIG.2